# EUROPEAN PATENT APPLICATION

(11) **EP 4 531 230 A1**
(43) Date of publication of application: **02.04.2025**
(21) Application number: 23815325.8
(22) Date of filing: 02.06.2023
(51) Int. Cl.: H02J 7/00, E04H 4/16

(54) **CHARGING METHOD FOR UNDERWATER CLEANING MACHINE, CHARGING STRUCTURE AND UNDERWATER CLEANING MACHINE**

(30) Priority: 02.06.2022 CN 202210623017; 02.06.2022 CN 202221367842 U; 08.06.2022 CN 202221412967 U; 08.06.2022 CN 202210639652
(71) Applicant: Wybotics Co., Ltd, Tianjin 300462 (CN)
(72) Inventor: GUAN, Shouqiang, Tianjin 300462 (CN); LI, Xiaotian, Tianjin 300462 (CN); SONG, Jianhong, Tianjin 300462 (CN); LI, Cheng, Tianjin 300462 (CN); WANG, Yueming, Tianjin 300462 (CN); LI, Baoze, Tianjin 300462 (CN)
(74) Representative: dompatent von Kreisler Selting Werner - Partnerschaft von Patent- und Rechtsanwälten mbB
(86) International application number: PCT/CN2023/098164
(87) International publication number: WO 2023/232149

(57) **Abstract**

A charging method for an underwater cleaning machine, a charging structure, and the underwater cleaning machine. A contact module is provided between a charging port and a battery of the underwater cleaning machine. The charging method comprises: during the non-charging period of the underwater cleaning machine, a contact module being kept in an off state, in the case that a charging port detects a power supply signal of a power supply, the contact module being switched on to enable the power supply to charge a battery, By means of the contact module, charging and discharging of the battery and effective isolation between the charging port and the battery are achieved, so as to achieve the purpose of preventing equipment leakage and electric corrosion.

## Description

### FIELD

The present application relates to the field of cleaning equipment technology, and in particular to a charging method for an underwater cleaning machine, and a charging structure thereof, and an underwater cleaning machine.

### BACKGROUND

Underwater cleaning machine is a kind of cleaning robot that can perform cleaning tasks underwater, which can help users clean swimming pools, improve cleaning efficiency of the swimming pools and reduce cleaning cost of the swimming pools. Usually, when the user needs to clean the swimming pool, the underwater cleaning machine is placed in the swimming pool. The underwater cleaning machine relies on its own gravity to sink to the bottom of the swimming pool and performs cleaning tasks from the bottom of the swimming pool.

When the underwater cleaning machine works in the swimming pool, its charging port will be immersed in the swimming pool. Because the charging port is connected with positive and negative electrodes of an internal battery pack, the positive and negative electrodes of the charging port will form an electrolytic circuit, resulting in electrolytic corrosion.

### SUMMARY OF INVENTION

The embodiments of the present application provide a charging method for an underwater cleaning machine, and a charging structure thereof, and an underwater cleaning machine.

In the first aspect, an embodiment of the present application provides a charging method for an underwater cleaning machine.

A contact module is arranged between a charging port and a battery of the underwater cleaning machine, and the contact module remains a disconnecting state during a non-charging period of the underwater cleaning machine; the charging method comprises: in a case that a power supply signal of a power supply is detected by the charging port, conducting the contact module to make the power supply charge to the battery.

In some embodiments, the underwater cleaning machine further comprises a charging management module; wherein the charging management module is used to monitor a charging current and/or a voltage of the battery; and
the charging management module is connected with the contact module.

In some embodiments, the underwater cleaning machine further comprises a voltage-stabilizing module, and the voltage-stabilizing module and the contact module are arranged between the charging port and the battery. in a case that the charging port detecting the power supply signal of the power supply, the contact module is controlled to be conducting by the voltage-stabilizing module to make a power supply charge the battery.

In some embodiments, the underwater cleaning machine further comprises a controllable switching module and a control module. The controllable switching module is arranged between the contact module and the battery, an input port of the control module is connected with the contact module, and an output port of the control module is connected with the controllable switching module. The charging method further comprises:
in a case that the power supply signal is detected being output by the contact module through the control module, controlling the controllable switching module conducting through the control module to make the power supply charge the battery; or
in a case that the power supply signal is detected not being output by the contact module through the control module, controlling the controllable switching module to be disconnected through the control module to make the power supply stop charging the battery.

In some embodiments, the underwater cleaning machine further comprises a voltage sampling module connected with the input port of the control module; and
after the controllable switching module is controlled being conducting through the control module, the charging method further comprises:
collecting a voltage between both ends of the battery through the voltage sampling module; and
controlling the controllable switching module being disconnected through the control module in a case that the voltage between both ends of the battery is greater than a sampling voltage threshold.

In some embodiments, the underwater cleaning machine further comprises: a current sampling module, wherein the current sampling module is arranged between a negative electrode of the battery and the control module; and the method further comprises:
sampling charging and discharging currents of the battery through the current sampling module; and
controlling the controllable switching module being disconnected through the control module in a case that a charging current of the battery exceeds a threshold range of sampling current.

In some embodiments, the underwater cleaning machine further comprises a temperature sampling module arranged between the battery and the control module. The charging method further comprises:
obtaining a temperature value of the battery through the temperature sampling module; and
controlling the controllable switching module being disconnected through the control module in a case that the temperature value of the battery exceeds a temperature threshold range.

In some embodiments, the underwater cleaning machine further comprises a signal amplification module arranged between the current sampling module and the control module; and the charging method further comprises:
amplifying the charging and discharging currents of the battery by the signal amplification module to obtain an amplified current of the battery; and
determining a voltage corresponding to the amplified current of the battery;
when the voltage corresponding to the amplified current of the battery is less than a preset reference voltage, the battery is in a charging state; and
when the voltage corresponding to the amplified current of the battery is not less than the preset reference voltage, the battery is in a discharging state.

In some embodiments, the contact module is a mechanical contact switch, the mechanical contact switch comprises a relay, and the contact module comprises two or more normally open contacts.

In some embodiments, the controllable switching module is any one of a relay, a N-channel type insulated gate type field effect transistor or a P-channel type insulated gate type field effect transistor.

In some embodiments, one or more mechanical contact devices are arranged between the charging port of the underwater cleaning machine and the battery, in order that when a charger is disconnected from the charging port of the underwater cleaning machine, the mechanical contact device is disconnected, the charging port and the battery remain a disconnected state, and no electrolytic circuit is formed at the charging port.

In some embodiments, the mechanical contact device is a mechanical normally open contact device, and the mechanical contact device comprises two or more mechanical contacts.

In some embodiments, the mechanical contact device is a relay.

In some embodiments, one or more unidirectional conductive devices are arranged between the charging port and the battery, and the mechanical contact device and one or more unidirectional conductive devices are connected in series between the charging port and the battery.

In some embodiments, the charging port, the mechanical contact device, the unidirectional conductive device and the battery constitute a charging circuit, and a positive circuit and a negative circuit in the charging circuit both comprise one or more of the mechanical contacts, and the positive circuit and/or the negative circuit respectively comprise one or more of the unidirectional conductive devices.

The positive circuit is a circuit between a positive electrode of the charging port and a positive electrode of the battery, and the negative circuit is a circuit between a negative electrode of the battery and a negative electrode of the charging port.

In some embodiments, the unidirectional conductive device is a diode.

In some embodiments, the mechanical contact device is connected with a voltage-stabilizing circuit.

In some embodiments, when the charger is connected with the charging port of the underwater cleaning machine, a voltage-stabilizing circuit supplies power to the mechanical contact device, the mechanical contact device is in power, and the mechanical contact device is connected with the battery through a unidirectional conductive device for charging; and/or

when the charger is disconnected from the charging port of the underwater cleaning machine, the mechanical contact device is disconnected, and the charging port keeps a disconnecting state with the battery, in order that no electrolytic circuit is formed at positive and negative electrodes of the charging port.

The unidirectional conductive device is arranged between the mechanical contact device and the battery; and the voltage-stabilizing circuit is connected with the mechanical contact device.

In some embodiments, the voltage-stabilizing circuit comprises a first diode, a first resistor, a voltage-stabilizing diode and a triode, a positive electrode of the first diode is connected with a positive electrode of the charging port, a negative electrode of the first diode is connected with the first resistor, the first resistor is connected with a negative electrode of the voltage-stabilizing diode, a positive electrode of the voltage-stabilizing diode is connected with a negative electrode of the charging port, the base electrode and the collector of the triode are respectively connected to two ends of the first resistor, the emitter of the triode and the positive electrode of the voltage-stabilizing diode are connected with the mechanical contact device respectively.

In some embodiments, the mechanical contact device is connected in parallel with a second diode, a positive electrode of the second diode is connected with the positive electrode of the voltage-stabilizing diode, and a negative electrode of the second diode is connected with the emitter of the triode.

In some embodiments, in a case that the charger is connected with the charging port of the underwater cleaning machine, supplying power to the comparison module for charging through the voltage-stabilizing module;
collecting a current in a charging circuit through a sampling module;
obtaining a current direction through a comparison module, controlling conduction and disconnection of a switching module according to the current direction to determine whether charging is completed.

In some embodiments, whether the charging is completed is judged according to whether the charger removes the charging port, in a case that the charger removes the charging port, the charging is completed.

In some embodiments, a normally open contact module is connected between the charging port of the underwater cleaning machine and the battery, the normally open contact module is connected in series with the switching module and the sampling module respectively to control conduction and disconnection of a circuit between the charging port and the battery.

In a case that the charger is connected with the charging port of the underwater cleaning machine, supplying power to the normally open contact module through the voltage-stabilizing module, and the normally open contact module is closing for charging.

Otherwise, the normally open contact module remains in a normally opening state and does not be charged;
Preferably, the normally open contact module is a normally open mechanical contact device.
In some embodiments, in a case that the current direction is from the battery to the charging port, controlling the switching module to be conducting through the comparison module, and charging the battery through the charger.

In some embodiments, in a case that the current direction is a direction from the charging port to the battery, controlling the switching module to turn off through the comparison module, and the charging is completed.

Preferably, the charging is completed, and the normally open contact module is disconnected and is in a normally open state.

In some embodiments, the sampling module is connected between the charging port and the battery, and the sampling module is a sampling resistor.

In some embodiments, the comparison module comprises a comparator and a first triode, a reverse input end and a forward input end of the comparator are respectively connected to two ends of the sampling module, the first triode receives a output signal of the comparator, the comparator monitors a current direction of the sampling module, outputs a positive voltage or a negative voltage, and controls the turn-on or turn-off of the first triode.

Preferably, a first resistor is connected between the comparator and the first triode, and a second resistor is connected between a base electrode and a emitter electrode of the first triode.

In some embodiments, the switching module is connected between the charging port and the battery, the switching module comprises a transistor, the transistor comprises a parasitic diode, when the first triode is turned on, the positive electrode of the charging port forms a circuit through the transistor and the first triode with a negative electrode of the charging port, the transistor is turned on to quickly charge the battery; when the first triode is cut off, the transistor is turned off and the battery outward leakage circuit is cut off.

Preferably, a third resistor is connected between the gate electrode of the transistor and a collector of the first triode, and a fourth resistor is connected between the gate electrode of the transistor and the source electrode of the transistor.

Preferably, the transistor is a metal-oxide semiconductor field effect transistor.

In some embodiments, the voltage-stabilizing module comprises a second triode, a first diode, a fifth resistor and a voltage-stabilizing diode, a positive electrode of the first diode is connected with a positive electrode of the charging port, a negative electrode of the first diode is connected with a collector of the second triode, the negative electrode of the first diode is connected with a negative electrode of the voltage-stabilizing diode through the fifth resistor, a positive electrode of the voltage-stabilizing diode is connected with a negative electrode of the charging port, a negative electrode of the voltage-stabilizing diode is connected with a base electrode of the second triode, a emitter of the second triode is connected with the normally open contact module, the positive electrode of the voltage-stabilizing diode is connected with the normally open contact module, and the emitter of the second triode and the negative electrode of the charging port are respectively connected with the comparator to supply power for the comparator.

In some embodiments, the normally open contact module is connected in parallel with a second diode, a positive electrode of the second diode is connected with the negative electrode of the charging port, and the negative electrode of the second diode is connected with the emitter of the second triode.

In the second aspect, an embodiment of the present application provides a charging structure for an underwater cleaning machine, wherein the charging structure comprises: a charging port, a battery, and a contact module; the contact module is arranged between the charging port and the battery, the contact module remains in a disconnecting state during a non-charging period of the underwater cleaning machine; when the contact module is conducting, charging the battery from the charging port.

In some embodiments, the charging structure further comprises a charging management module connected with the contact module to manage a charging current and/or a voltage of the battery.

The charging port supplies power for the contact module and controls disconnection or conduction of the contact module.

In some embodiments, the charging management module is arranged between the contact module and the charging port or between the contact module and the battery.

In some embodiments, the charging management module comprises a charging management chip and a corresponding peripheral circuit.

In some embodiments, the charging structure further comprises a voltage-stabilizing module, the contact module is connected between the charging port and the battery, during a non-charging period of the underwater cleaning machine, the contact module remains in a disconnecting state.

The voltage-stabilizing module is connected with the contact module, and the contact module is controlled to be conducting by the voltage-stabilizing module to make a power supply charge the battery.

In some embodiments, one or more controllable switching modules are arranged in a positive circuit and/or a negative circuit between the charging port and the battery, the controllable switching module is arranged between the contact module and the battery.

After the underwater cleaning machine is fully charged or the charger and/or charging power supply leave, the controllable switching module is in a disconnecting state;
After the underwater cleaning machine charger and/or a charging power supply leave, the contact module is in the disconnecting state.

In some embodiments, the underwater cleaning machine comprises a control module connected with the controllable switching module.

When an output signal of an output port of the contact module is detected by the control module, the controllable switching module is controlled to turn on.

In some embodiments, the charging structure of the underwater cleaning machine comprises a sampling module I.

The sampling module I collects data in charging and discharging circuits of the battery and transmits the data to the control module. The control module judges to turn on or turn off the controllable switching module according to the data of the sampling module I.

In some embodiments, the sampling module I comprises a voltage sampling module and/or a current sampling module.

In some embodiments, the underwater cleaning machine comprises a power supply button, and the power supply button connects the battery and a control unit making the battery supply power to the control unit.

In some embodiments, the charging structure further comprises a sampling module II, the sampling module II is arranged between the battery and the control module.

The sampling module II collects parameters of the battery and transmits the parameters to the control unit.

The control unit controls conduction and disconnection of the controllable switching module.

In some embodiments, the sampling module II comprises a battery current acquisition module and/or a battery cell temperature acquisition module.

In some embodiments, the charging structure is respectively connected with the charging port and the battery of the underwater cleaning machine, comprising a mechanical contact device, a voltage-stabilizing circuit and one or more unidirectional conductive devices. The mechanical contact device and the one or more unidirectional conductive devices are connected in series between the charging port and the battery, the voltage-stabilizing circuit is connected with the mechanical contact device, the mechanical contact device is a mechanical normally open contact device, and the mechanical contact device comprises two or more mechanical contacts.

In some embodiments, the charging port, a mechanical contact device, an unidirectional conductive device and the battery constitute a charging circuit. A positive circuit and a negative circuit in the charging circuit respectively comprise one or more the mechanical contacts, and the positive circuit and/or the negative circuit comprise one or more the unidirectional conductive devices, respectively.

The positive circuit is a circuit between a positive electrode of the charging port and a positive electrode of the battery, and the negative circuit is a circuit between a negative electrode of the battery and a negative electrode of the charging port.

In some embodiments, in the positive circuit or the negative circuit, positions of the mechanical contact connected and the unidirectional conductive device in series is interchangeable.

In some embodiments, a positive circuit is as follows: a positive electrode of the charging port is connected with one end of a mechanical contact, the other end of the mechanical contact is connected with a positive electrode of an unidirectional conductive device, and a negative electrode of the unidirectional conductive device is connected with a positive electrode of the battery.

In some embodiments, a negative circuit is that: a negative electrode of the battery is connected with a positive electrode of the unidirectional conductive device, a negative electrode of the unidirectional conductive device is connected with one end of the mechanical contact, and the other end of the mechanical contact is connected with a negative electrode of the charging port.

In some embodiments, the unidirectional conductive device is a diode.

In some embodiments, the voltage-stabilizing circuit comprises a first diode, a first resistor, a voltage-stabilizing diode and a triode, a positive electrode of the first diode is connected with a positive electrode of the charging port, a negative electrode of the first diode is connected with the first resistor, the first resistor is connected with a negative electrode of the voltage-stabilizing diode, a positive electrode of the voltage-stabilizing diode is connected with a negative electrode of the charging port, the base electrode and the collector of the triode are respectively connected to two ends of the first resistor, the emitter of the triode and the positive electrode of the voltage-stabilizing diode are connected with the mechanical contact device respectively.

In some embodiments, the mechanical contact device is connected in parallel with a second diode, a positive electrode of the second diode is connected with the positive electrode of the voltage-stabilizing diode, and a negative electrode of the second diode is connected with the emitter of the triode.

In some embodiments, the mechanical contact device is a relay.

In some embodiments, connected between the charging port of the underwater cleaning machine and the battery, the charging structure comprises:
a sampling module, connected between the charging port and the battery to collect a current in the charging circuit;
a switching module, connected between the charging port and the battery to control voltage on and off of a battery leakage circuit;
a comparison module designed for monitoring a current direction of the sampling module to control conduction and disconnection of the switching module; and
a voltage-stabilizing module, connected with a positive electrode and a negative electrode of the charging port respectively to supply power for the comparison module.

In some embodiments, the sampling module is a sampling resistor.

In some embodiments, the comparison module comprises a comparator and a first triode, a reverse input end and a forward input end of the comparator are respectively connected to two ends of the sampling module, the first triode receives a output signal of the comparator, the comparator monitors a current direction of the sampling module, outputs a positive voltage or a negative voltage, and controls the turn-on or turn-off of the first triode.

In some embodiments, a first resistor is connected between the comparator and the first triode, and a second resistor is connected between a base electrode and a emitter electrode of the first triode.

In some embodiments, the switching module comprises a transistor, the transistor comprises a parasitic diode. When the first triode is turned on, the positive electrode of the charging port forms a circuit through the transistor and the first triode with a negative electrode of the charging port, the transistor is turned on to quickly charge the battery; when the first triode is cut off, the transistor is turned off and the battery outward leakage circuit is cut off; a third resistor is connected between the gate electrode of the transistor and a collector of the first triode, and a fourth resistor is connected between the gate electrode of the transistor and the source electrode of the transistor.

In some embodiments, the transistor is a metal-oxide semiconductor field effect transistor.

In some embodiments, the charging structure further comprises a normally open contact module, the normally open contact module is arranged between the charging port and the battery, the normally open contact module is connected in series with the switching module and the sampling module respectively to control conduction and disconnection of the circuit between the charging port and the battery.

The normally open contact module is connected with the voltage-stabilizing module, and the voltage-stabilizing module supplies power to the normally open contact module.

In some embodiments, the normally open contact module is a normally open mechanical contact device; the normally open mechanical contact device is a relay.

In some embodiments, the voltage-stabilizing module comprises a second triode, a first diode, a fifth resistor and a voltage-stabilizing diode. A positive electrode of the first diode is connected with a positive electrode of the charging port, a negative electrode of the first diode is connected with a collector of the second triode, the negative electrode of the first diode is connected with a negative electrode of the voltage-stabilizing diode through the fifth resistor. A positive electrode of the voltage-stabilizing diode is connected with a negative electrode of the charging port, a negative electrode of the voltage-stabilizing diode is connected with a base electrode of the second triode, a emitter of the second triode is connected with the normally open contact module, the positive electrode of the voltage-stabilizing diode is connected with the normally open contact module, and the emitter of the second triode and the negative electrode of the charging port are respectively connected with the comparator to supply power for the comparator.

In some embodiments, the normally open contact module is connected in parallel with a second diode, a positive electrode of the second diode is connected with the negative electrode of the charging port, and the negative electrode of the second diode is connected with the emitter of the second triode.

In the third aspect, an embodiment of the present application provides an underwater cleaning machine, the underwater cleaner comprises the charging structure of any of the above embodiments.

The beneficial effects of the technical solutions provided by the embodiments of the present application include at least: in the embodiments of the present application, the contact module can be kept the disconnected state during the non-charging period of the underwater cleaner, and the contact module can be turned on to make the power supply charge to the battery when the power supply signal is detected by the charging port. Therefore, the embodiments of the present application can realize the charging and discharging of the battery and the effective isolation between the charging port and the battery by using the contact module, so as to achieve the purpose of preventing equipment leakage and electrical corrosion.

### DESCRIPTION OF DRAWINGS

In order to more clearly explain the technical scheme in the embodiments of this application, the following will be a brief introduction to accompanying drawings used in the embodiments. Obviously, the accompanying drawings in the following description are only some of the embodiments examples of this application. For those skilled in the art, other accompanying drawings can be obtained according to these accompanying drawings without paying creative work.
FIG. 1 is a structure block diagram of each module in an underwater cleaning machine according to embodiments of the present application.
FIG. 2 is a structure block diagram of each module in another underwater cleaning machine according to embodiments of the present application.
Fig. 3 is a schematic diagram of an internal structure of another underwater cleaning machine according to embodiments of the present application.
Fig. 4 is a schematic diagram of a circuit structure of a signal amplification module in underwater cleaning machine according to embodiments of the present application.
Fig. 5 is a schematic diagram of a circuit structure of an underwater cleaning machine using NMOS controllable switching module according to embodiments of the present application.
Fig. 6 is a schematic diagram of a circuit structure of an underwater cleaning machine using PMOS controllable switching module according to embodiments of the present application.
Fig. 7 is a schematic diagram of a circuit structure of an underwater cleaning machine using a relay controllable switching module according toembodiments of the present application.
Fig. 8 is a flow diagram of a charging method for another underwater cleaning machine according to embodiments of the present application.
Fig. 9 is schematic diagram of a charging circuit structure of another underwater cleaning machine according to embodiments of the present application.
Fig. 10 is a flow diagram of a charging method for yet another underwater cleaning machine according to embodiments of the present application.
Fig. 11 is schematic diagram of a charging circuit structure of yet another underwater cleaning machine according to embodiments of the present application.

### DETAILED DESCRIPTION OF PREFERRED EMBODIMENTS

The following description relates to the accompanying drawings, unless otherwise indicated, the same figures in different drawings represent the same or similar elements. The means of embodiments described in the following exemplary embodiments does not represent all the means of embodiments consistent with the present application. On the contrary, they are only examples of devices and methods that are consistent with some aspects of the present application, as detailed in the accompanying claims.

In the description of the present application, it is necessary to understand that the terms ' first ', ' second ', etc. are only used for descriptive purposes and cannot be understood as indicating or implying relative importance. For those skilled in the art, specific meaning of the above terms in the present application can be understood based on a specific situation. In addition, in the description of the present application, unless otherwise stated, ' multiple ' means two or more. 'and/or ', which describes a relationship between associated objects, indicates that there can be three relationships, for example, A and/or B, which can be expressed as follows: A exists alone, A and B exist at the same time, and B exists alone. The character '/' generally indicates that objects associated before and after is a ' or ' relationship.

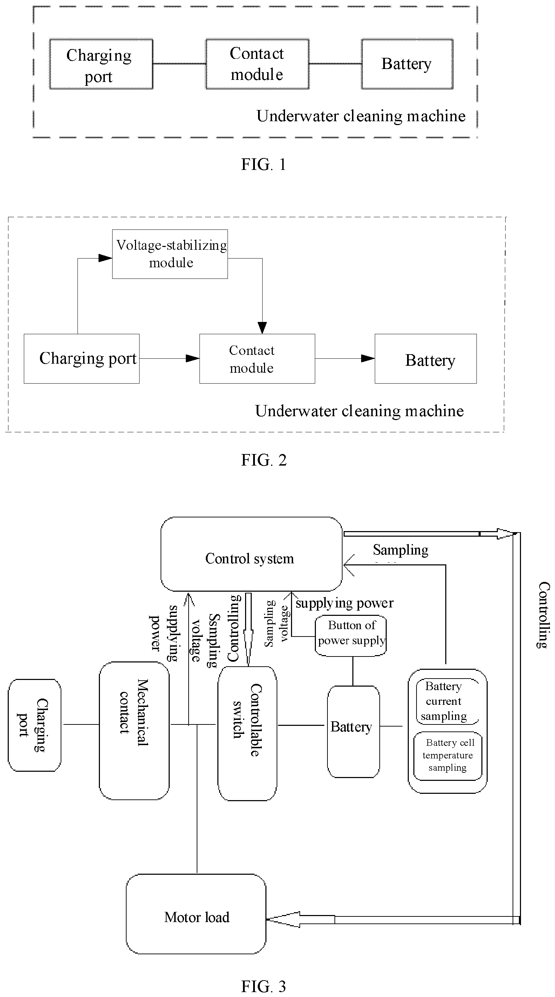

See Figure. 1, the underwater cleaning machine according to embodiments of the present application can include: a charging port, a contact module, and a battery. The contact module is arranged between the charging port and the battery, the contact module remains a disconnecting state during a non-charging period of the underwater cleaning machine. When the charging port detects a power supply signal of a power supply, the contact module is turned on to make the power supply charge the battery. Optionally, the contact module is a mechanical contact switch. The mechanical contact switch can include a relay. The contact module has two or more normally open contacts. For example, the contact module may include two relays, each of which includes a normally open contact. It can also be a relay including two normally open contacts. Wherein a positive end of the charging port corresponding to one normally open contact point and a negative end of the charging port corresponding to the other normally open contact point. In this way, the embodiments of the present application can completely isolate the positive end and the negative end of the charging port from the contact module to avoid formation of an electrolytic circuit between the charging port and other components, resulting in electric leakage and other problems.

Further, the underwater cleaning machine according to embodiments of the present application can also include a charging management module. The charging management module is used to monitor a charging current and/or a charging voltage of the battery. Specifically, the charging management module and the contact module are connected. The charging management module can include a charging management chip and a corresponding peripheral circuit.

Possibly, the charging management module of the present application can be arranged between the contact module and the charging port, or between the contact module and the battery. Understandably, the charging management chip can adjust output of the power supply to a voltage of the battery for battery charging, thus the power supply can be a voltage of the relay, so that the mechanical contact switch can be closed after the power supply is inserted into the charging port, and the circuit loop is turned on. In addition, if a USB power supply with the same voltage as the relay is used to charge the battery, when the charging management chip collects a voltage and a current of the USB power supply, the mechanical contact switch can be directly controlled to close, so that the USB power supply begins to charge the battery.

Possibly, the charging management module of the present application may also include a voltage-stabilizing module. The voltage-stabilizing module and the contact module can be arranged between the charging port and the battery. When the charging port detects a power supply signal of the power supply, the contact module is controlled to be conducting by the voltage-stabilizing module to make the power supply charge to the battery. See Fig. 2, when the voltage-stabilizing module obtains the power supply signal of the power supply, the relay in the contact module can be controlled to close, so that the charging circuit is turned on and the power supply begins to charge the battery.

Possibly, the charging management module of the present application may also include: a controllable switching module and a control module. The controllable switching module is arranged between the contact module and the battery. An input end of the control module is connected with the contact module, and an output end of the control module is connected with the controllable switching module. When the control module detects a power supply signal output by the contact module, the controllable switching module is controlled to be conducting by the control module to make the power supply charge the battery; or when the control module detects the contact module doing not output a power supply signal, the controllable switching module is disconnected by the control module to stop the power supply charging to the battery.

Specifically, one or more controllable switching modules in the present application can be arranged in a positive circuit and/or a negative circuit between the charging port and the battery. After the underwater cleaning machine is fully charged or a charger and/or a charging power supply leave, the controllable switching module is in a disconnecting state; after the charger of the underwater cleaning machine and/or the charging power supply leave, the contact module is in a disconnecting state.

See Fig. 3, after a mechanical contact in the contact module is closed, the control system can obtain a voltage sampling signal, so that the control system can send a conduction command to a controllable switch in the controllable switching module to make a line between the mechanical contact and the battery be conducting. On the contrary, when the power supply is removed from the charging port, a power supply signal disappears immediately. In other words, the control system detects a change of the power supply signal, and the control module needs to control the controllable switching module to disconnect, so as to prevent electric leakage of equipment caused by discharge of the battery to the mechanical contact, as well as electrolytic corrosion and other phenomena at positions such as the charging port.

Further, the underwater cleaning machine provided by embodiments of the present application can also include: a voltage sampling module. The voltage sampling module is connected with an input end of the control module. The embodiments of the present application can collect a voltage between both ends of the battery through the voltage sampling module; when the voltage between both ends of the battery is greater than a sampling voltage threshold, the controllable switching module is controlled to be disconnected by the control module.

Understandably, embodiments of the present application can determine whether the battery is full by collecting the voltage between both ends of the battery, which can be judged by setting the sampling voltage threshold. When the voltage between both ends of the battery is greater than the sampling voltage threshold, the battery is full, and the control system can control the controllable switch to disconnect to avoid possible damage to the battery caused by long-term charging.

See Figure. 3 for the schematic diagram of the internal module of the underwater cleaning machine.. The underwater cleaning machine provided by embodiments of the present application can also include: a sampling module I and a sampling module II. Specifically, the sampling module I can include a voltage sampling module and/or a current sampling module. The sampling module I is used to collect data in charging and discharging circuits of the battery and transmit it to the control module. The control module can judge whether the controllable switching module is on or off according to the data of the sampling module I. The current sampling module is arranged between a negative electrode of the battery and the control module, and charging and discharging currents of the battery is sampled by the current sampling module. When the charging current of the battery exceeds a threshold range of a sampling current, the controllable switching module is controlled to disconnect by the control module. The sampling module II is arranged between the battery and the control module to collect parameters of the battery and transmit them to a control unit. The control unit controls conduction and disconnection of the controllable switching module based on these sampled data. In addition, the underwater cleaning machine can also include a power supply button, the power supply button connects the battery and the control unit, so that the battery supplies power to the control unit.

The underwater cleaning machine provided by embodiments of the present application can also include: a temperature sampling module. The temperature sampling module is arranged between the battery and the control module. Temperature value of the battery is obtained by the temperature sampling module; when the temperature value of the battery exceeds the temperature threshold range, the controllable switching module is disconnected by the control module.

Specifically, the temperature sampling module in the embodiments of the present application can use a temperature sensor, which is at least a Negative Temperature Coefficient (NTC ) resistor. The temperature sensor is used to control a system to monitor a temperature value of a electrical core during battery charging and discharging. Data of the temperature can be displayed through a display interface (panel or application APP) of the control system to make users aware of a temperature state of the battery. If the temperature value is abnormal, the control system can automatically turn off the controllable switch, and the user can also turn off the switch manually, so as to cut off the charging and discharging circuits of the battery and ensure safety of the battery.

Possibly, The underwater cleaning machine provided by embodiments of the present application can also include: a signal amplification module. The signal amplification module is arranged between the current sampling module and the control module. The charging and discharging currents of the battery is amplified by the signal amplification module to obtain a amplified current of the battery; determining a voltage corresponding to the amplified current of the battery; if the voltage corresponding to the amplified current of the battery is less than a preset reference voltage, the battery is in a charging state; if the voltage corresponding to the amplified current of the battery is greater than or equal to the preset reference voltage, the battery is in a discharging state.

Understandably, because a current direction in a charging circuit is opposite to that in a discharging circuit, and a digital circuit used in the control system can only process signals in a single direction, it is necessary to amplify an output signal of the battery to convert positive and negative currents into a single positive direction current signal for the control system to perform analog-digital AD sampling.

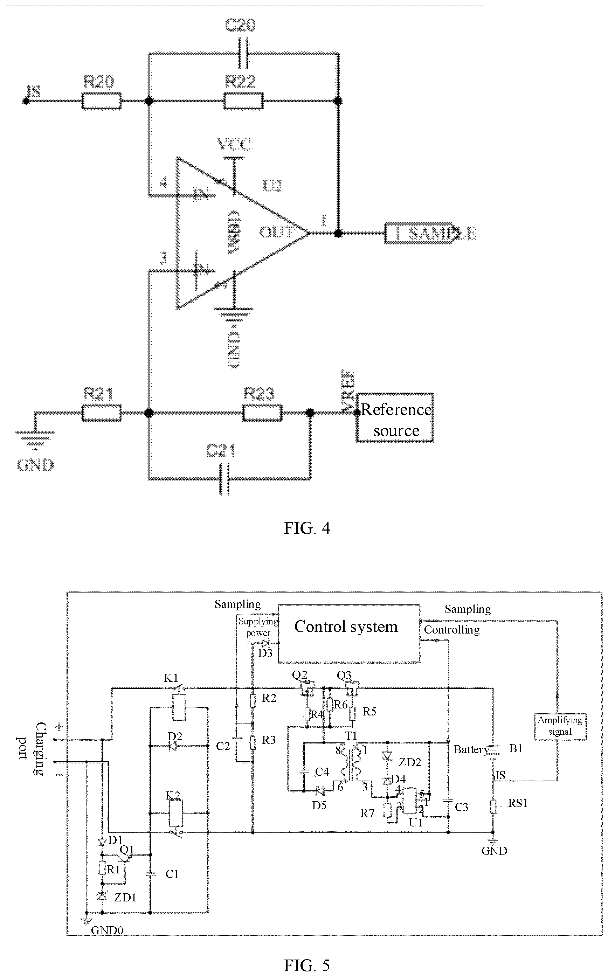

See Figure. 4 for the schematic diagram of a circuit structure of a signal amplification module. The signal amplification module is arranged in a negative circuit of the battery. Specifically, an IS port is connected with a negative electrode of the battery. A signal is connected with a negative input end 4 of a signal amplifier through a resistor R20. A resistor R22 and a capacitor C20 are connected in parallel between a negative input 4 of the signal amplifier and an output 1 of the signal amplifier ( the resistor R22 and the capacitor C20 are also in parallel with each other ). One end of a positive electrode input end 3 of the signal amplifier is grounded by resistor R21, and the other end is connected with a reference source VREF through a resistor R23 and a capacitor C21 which are in parallel, respectively. Wherein the reference source can be set to a voltage of 2.5 V, thereby increasing a output signal of the battery to between 0~ 5 V. For example, after amplifying a voltage corresponding to the charging and discharging currents of the battery, the voltage is greater than 0 V but less than a reference voltage 2.5 V, indicating that the battery is in a charging state; if the voltage is greater than or equal to a preset reference voltage of 2.5 V, the battery is in a discharging state.

Specifically, the controllable switching module in embodiments of the present application can be any one of a N-channel insulated gate field effect transistor NMOS, a P-channel insulated gate field effect transistor PMOS, or a relay. Because the NMOS, the PMOS, and the relay are low internal resistance devices, in the case of sampling with the same voltage, a current generated is greater than a current generated by a diode in the related technology. Therefore, the charging method provided in embodiments of the present application is more efficient and saves the charging time effectively. In addition, due to a voltage drop of 0.6 ~ 0.7 V between positive and negative electrodes of the diode, a high current will increase a temperature of the diode and affect safety of a charging structure when a large power supply voltage is used. Due to influence of the voltage drop, there may also be a certain voltage drop between the power supply and the battery, resulting in the problem that the battery cannot be filled. The low internal resistance devices such as NMOS used in the present application can fill the battery without voltage supplement, which effectively improves an utilization rate of the battery.

See Figure. 5 for a schematic diagram for a circuit structure of the underwater robot using an NMOS controllable switching module. Specifically, a positive electrode end of the charging port is connected with one end of a relay K1, and a negative electrode end of the charging port is connected with one end of a relay K2. There is a diode D2 in parallel between the relay K1 and the relay K2, and the positive electrode end of the charging port is also connected with the voltage-stabilizing module. Specifically, the voltage-stabilizing module includes: a diode D1 which is connected to the positive electrode end of the charging port, a resistor R1, a voltage-stabilizing diode ZD1, a triode Q1, and a capacitor C1. Where a positive electrode end of the diode D1 is connected with a positive electrode end of the charging port, a negative electrode end of the diode D1 is connected with one end of the resistor R1 and a collector of the triode Q1 respectively, the other end of the resistor R1 is connected with a negative electrode of the voltage-stabilizing diode ZD1 and a base electrode of the triode Q1 respectively, a positive electrode of the voltage-stabilizing diode ZD1 is grounded, an emitter of the triode Q1 is connected with one end of the relay K1 and relay K2 respectively, and one end of the capacitor C1, and the other end of the capacitor C1 is grounded. The other end of the relay K1 is connected with a positive electrode of the battery B1 through the NMOS controllable switching module. The other end of the relay K2 is powered to the control system through the resistor R2, the resistor R3, and the diode D3. Two ends of the resistor R3 are connected in parallel with a capacitor C2 to input sampling signals between both ends of the R3 to the control system. The other end of the relay K2 is also connected with one end of a drive module and a resistor RS1 respectively. The other end of the resistance RS1 is connected with a negative electrode of a battery B1 and the input end of the signal amplification module respectively. An output end of the signal amplification module inputs the sampling signal to the control system. An output end of the control system outputs a control signal to the drive module, so that the drive module drives the NMOS controllable switching module to turn on or turn off. Wherein the NMOS controllable switching module can include: an NMOS tube Q2, an NMOS tube Q3, a resistor R4, a resistor R5, and a resistor R6; a drain of the NMOS tube Q2 is connected with positive electrodes of the relay K1 and the diode D3. A source electrode of NMOS tube Q2 is connected with a source electrode of NMOS transistor Q3, one end of the resistor R6 and the drive module respectively. A drain of the NMOS tube Q3 is connected with a positive electrode of the battery B1. A gate electrode of the NMOS tube Q2 is connected with one end of the resistor R4. A gate electrode of the NMOS tube Q3 is connected with one end of the resistor R5. The other end of the resistor R4, the other end of the the resistor R5 and the other end of the resistor R6 are connected with the drive module. The drive module includes: a capacitor C3 and a capacitor C4, a diode D5, a transformer T1, a voltage-stabilizing diode ZD2, a diode D4, an isolated power supply chip U1, and a resistor R7; a terminal 8 of a transformer T1 is connected with the source electrode of the NMOS tube Q2 and one end of the capacitor C4, respectively. The other end of the capacitor C4 is connected with a negative electrode of the diode D5. A positive electrode of a Schottky diode D5 is connected with a terminal 6 of the transformer T1. The terminal 1 of the transformer T1 is connected with the positive electrode of the voltage-stabilizing diode ZD2, the terminals 1 and 5 of the isolated power supply chip U1, the end of the capacitor C3, and the output end of the control system, respectively. The negative electrode of the voltage-stabilizing diode ZD2 is connected with a negative electrode of the diode D4. A positive electrode of the diode D4 is connected with the terminal 3 of the transformer T1, one end of the resistor R7 and a terminal 4 of the isolated power supply chip U1 respectively. The other end of the resistance R7 is connected with a terminal 3 of the isolated power supply chip U1. A terminal 2 of the isolated power supply chip U1 is connected with the other end of the capacitor C3 and a negative electrode of the charging port respectively.

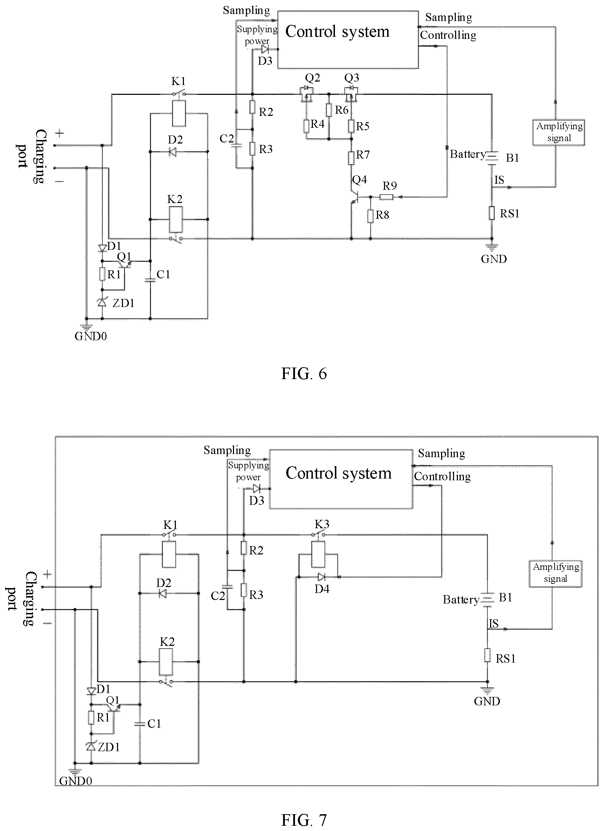

See Figure. 6 for a schematic diagram of a circuit structure of an underwater robot using a PMOS controllable switching module.. Specifically, a positive electrode of the charging port is connected with one end of a relay K1, and a negative electrode of the charging port is connected to one end of a relay K2. There is a diode D2 in parallel between the relay K1 and the relay K2, and the positive electrode of the charging port is also connected with the voltage-stabilizing module. The voltage-stabilizing module specifically includes: a diode D1 which is connected to the positive electrode end of the charging port, a resistor R1, a voltage-stabilizing diode ZD1, a triode Q1, and a capacitor C1. Wherein a positive electrode end of the diode D1 is connected with the positive electrode of the charging port, the negative electrode end of the diode D1 is connected with one end of the resistor R1 and the collector of the triode Q1 respectively, the other end of the resistor R1 is connected with a negative electrode of the voltage-stabilizing diode ZD1 and a base electrode of the triode Q1 respectively, the positive electrode of the voltage-stabilizing diode ZD1 is grounded, a emitter of the triode Q1 is connected with one end of the relay K1 and the relay K2, and one end of the capacitor C1 respectively, and the other end of the capacitor C1 is grounded. The other end of the relay K1 is connected with a positive electrode of the battery B1 through a PMOS controllable switching module. The other end of the relay K2 is powered to the control system through a resistor R2, a resistor R3, and a diode D3. Wherein two ends of the resistor R3 are connected in parallel with a capacitor C2 to input sampling signals between both ends of the R3 to the control system. The other end of the relay K2 is also connected with one end of a drive module and a resistor RS1 respectively. The other end of the resistor RS1 is connected with a negative electrode of the battery B1 and an input end of the signal amplification module respectively. The output end of the signal amplification module inputs sampling signal to the control system. An output of the control system outputs control signal to the drive module, so that the drive module drives the PMOS controllable switching module to turn on or turn off. Where the PMOS controllable switching module can include: a PMOS tube Q2, a PMOS tube Q3, a resistor R4, a resistor R5, and a resistor R6; a drain of PMOS tube Q2 is connected with a positive electrode of the relay K1 and the diode D3. A source electrode of PMOS tube Q2 is connected with the source electrode of PMOS tube Q3, one end of the resistor R6 and the drive module respectively. The drain of NMOS transistor Q3 is connected to the positive electrode of battery B1. A gate electrode of the PMOS tube Q2 is connected with one end of the resistor R4. The gate electrode of PMOS transistor Q3 is connected to one end of the resistor R5. The other end of the resistor R4, resistor R5 and resistor R6 is connected with the drive module. The drive module includes: a transistor Q4, a resistor R7, a resistor R8, and a resistor R9; the output of the control system is connected with a base electrode of the transistor Q4 through the resistor R9. The base electrode of the transistor Q4 is also connected with its emitter electrode and the relay K2 through the resistor R8. The collector of the transistor Q4 is connected with the resistor R5 through the resistor R7.

See Figure. 7 for a schematic diagram of a circuit structure of an underwater robot using a relay controllable switching module. Specifically, the positive electrode of the charging port is connected with one end of a relay K1, and the negative electrode end of the charging port is connected with one end of a relay K2. There is a diode D2 in parallel between the relay K1 and the relay K2, and the positive electrode end of the charging port is also connected with the voltage-stabilizing module. The voltage-stabilizing module includes: a diode D1 which is connected to the positive electrode end of the charging port, a resistor R1, a voltage-stabilizing diode ZD1, a triode Q1, and a capacitor C1. Wherein a positive electrode end of the diode D1 is connected with the positive electrode end of the charging port. A negative electrode end of the diode D1 is connected with one end of the resistor R1 and a collector of the triode Q1, respectively. The other end of the resistor R1 is connected with a negative electrode of the voltage-stabilizing diode ZD1 and a base of the triode Q1, respectively. The positive electrode of the voltage-stabilizing diode ZD1 is grounded. A emitter of the triode Q1 is connected with one end of the relay K1 and the relay K2, and one end of the capacitor C1, respectively. The other end of the capacitor C1 is grounded. The other end of the relay K1 is connected with a positive electrode of the battery B1 through a relay controllable switching module. The other end of the relay K2 is powered by the resistor R2, the resistor R3, and the diode D3 to the control system. Two ends of the resistor R3 are connected in parallel with the capacitor C2 to input sampling signals between both ends of the R3 to the control system. The other end of the relay K2 is also connected with one end of the relay controllable switching module resistor RS1. The other end of the resistor RS1 is connected with a negative electrode of the battery B1 and an input end of a signal amplification module respectively. An output end of the signal amplification module inputs sampling signals to the control system. An output end of the control system outputs a control signal to the relay controllable switching module to turn the relay controllable switching module on or off. Wherein the relay controllable switching module can include: a relay K3 and a diode D4; the positive electrode end of the diode D4 is connected with the negative electrode of the charging port and the resistor R3, and the positive electrode end of the diode D4 is connected with an output of the control system.

Possibly, the underwater cleaning machine in embodiments of the present application can also include: a motor load. An output of the control system is also connected with the motor load. Specifically, when the contact module is in a state of disconnecting and the battery is in a state of discharging, the controllable switching module can be controlled by the control system to close and supply power to the motor load through the battery. Therefore, embodiments of the present application can use a controllable switch to control conduction and disconnection between the battery and the motor load, without setting a separate switch to control disconnection between the two, effectively saving cost of components.

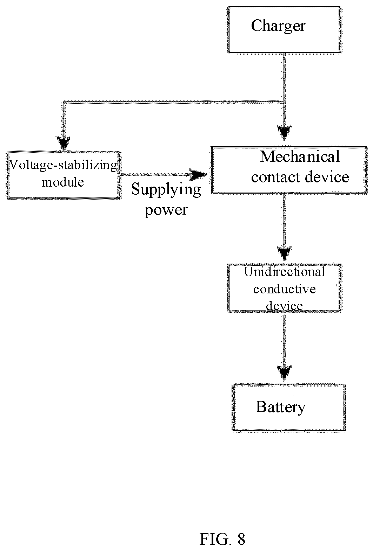

Refer to a flow diagram of a charging method of another underwater cleaning machine provided in the present application as shown in Figure. 8. As shown in Fig. 8, the charging method of the underwater cleaning machine can include the following steps: the mechanical normally open contact device is used to disconnect a connection between a charging port and an internal battery. When charging, the mechanical contact device is turned on. After a charger is removed, the mechanical contact device is automatically disconnected, so as to avoid formation of electrolytic circuit between positive and negative electrodes of the charging port and avoid electrolytic corrosion.

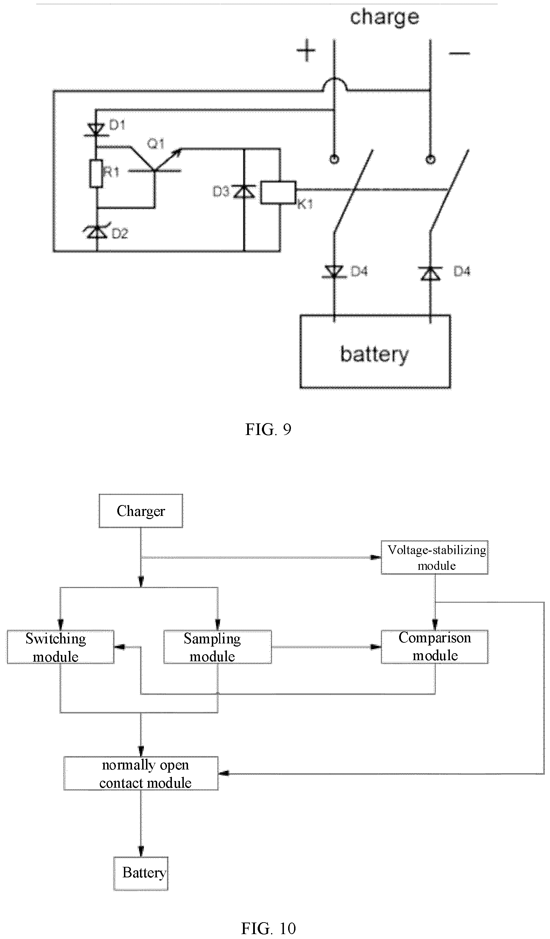

As shown in Fig. 8 and Fig. 9, one or more mechanical contact devices K1 is arranged between the charging port and a battery of the underwater cleaning machine, so that when the charging port of the underwater cleaning machine is disconnected with the charger, the mechanical contact device K1 is disconnected, and the charging port and the battery remain in a disconnecting state, and no electrolytic circuit is formed at the charging port. In a non-charging state (such as the charger is removed ), the charging port and the battery are kept in an opening state to ensure that a pool cleaning machine is in an uncharged state when operating in water, thus avoiding positive and negative electrodes of the charging port to form an electrolytic circuit, avoiding electrolytic corrosion and prolonging service life.

Structures for preventing corrosion of the charging port of the underwater cleaning machine includes a mechanical contact device K1, a voltage-stabilizing circuit and one or more unidirectional conductive devices D4. The mechanical contact device K1 is connected in series with one or more unidirectional conductive devices D4 between the charging port and the battery, and the voltage-stabilizing circuit is connected with the mechanical contact device K1. The mechanical contact device K1 is a mechanical normally open contact device, and the mechanical contact device K1 provides two or more mechanical contacts. When the underwater cleaning machine is in the non-charging state, the mechanical contact device K1 remains in a normally opening state, and the charging port and the battery remain in a disconnecting state to ensure that the underwater cleaning machine is in an uncharged state when running in water. When the charger is correctly connected with the charging port, the voltage-stabilizing circuit provides a stable voltage value for the mechanical contact to ensure a stable operation of the mechanical contact device K1, so that the mechanical contact device K1 is closed. The charging port is connected with the battery through the unidirectional conductive device D4 to perform charging. When the charger is removed, due to existence of the unidirectional conductive device D4, the mechanical contact device K1 is disconnected, so that the charging port and the battery remain in a disconnecting state. It ensures that the underwater cleaning machine is in a non-charging state when operating in water, and avoids electrolytic corrosion.

The above mechanical contact device K1 is a mechanical normally open contact device, and the mechanical contact device provides two or more mechanical contacts. Preferable, in this embodiment, the mechanical contact device K1 is a relay.

At least one unidirectional conductive device D4 is arranged between the charging port and the battery. The mechanical contact device K1 and the at least one unidirectional conductive devices D4 are connected in series between the charging port and the battery. In the charging circuit from the charging port to the battery, position of the mechanical contact device K1 and that of the unidirectional conductive device D4 in series can be interchanged. Along a direction from the charging port to the battery, it can be the charging port, the mechanical contact device K1, the unidirectional conductive device D4 and the battery are connected in turn, or the charging port, the unidirectional conductive device D4, the mechanical contact device K1 and the battery are connected in turn. According to the actual demand, the setting is selected, and no specific requirements are made here.

Specifically, the charging port, the mechanical contact device K1, the unidirectional conductive device D4 and the battery form a charging circuit to charge the battery. The charging circuit includes a positive circuit and a negative circuit which are connected. Both the positive circuit and the negative circuit in the charging circuit include one or more mechanical contacts, and both the positive circuit and/or the negative circuit include one or more unidirectional conductive devices. That is, in the positive circuit, it can include a mechanical contact, or, it can include multiple mechanical contacts, according to actual needs of choices. In the negative circuit, it can include a mechanical contact, or, it can include multiple mechanical contacts, according to actual needs of choices. In the positive circuit and the negative circuit, at least one of the circuits include one or more unidirectional conductive devices D4. It can be that the positive circuit includes one or more unidirectional conductive devices D4, and there is no unidirectional conductive device D4 in the negative circuit. Or, the negative circuit includes one or more unidirectional conductive devices D4, and there is no unidirectional conductive device D4 in the positive circuit. Or, both the positive circuit and the negative circuit include one or more unidirectional conductive devices D4. according to actual needs of choices, here do not make specific requirements. The arrangment of the unidirectional conductive device D4 can ensure that the mechanical contact device K1 remains in a opening state in the non-charging state of the underwater cleaning machine. When the underwater cleaning machine is connected with the charger, the mechanical contact device K1 is closed under an action of the voltage-stabilizing circuit. The charging port is connected with the battery through the unidirectional conductive device D4 for charging. When the charger is removed and/or charged, the unidirectional conductive device D4 makes a voltage of the battery unable to output to the charging port, and the voltage-stabilizing circuit loses power. The mechanical contact device K1 is disconnected, so that the charging port and the battery remain in a disconnecting state, avoiding electrolytic corrosion.

When the positive circuit or the negative circuit includes multiple mechanical contacts and multiple unidirectional conductive devices D4, the multiple mechanical contacts are connected in parallel, multiple unidirectional conductive devices D4 are connected in parallel, and multiple parallel connected mechanical contacts are connected in series with multiple parallel connected unidirectional conductive devices D4. The number of mechanical contacts and the number of unidirectional conductive devices D4 are selected according to actual needs, and no specific requirements are made here.

The positive circuit is a circuit between the positive electrode of the charging port and the positive electrode of the battery, and the negative circuit is a circuit between the negative electrode of the battery and the negative electrode of the charging port.

In the positive circuit or the negative circuit, position of the series connected mechanical contact and the unidirectional conductive device D4 can be exchanged, that is, in the positive circuit, the positive electrode of the charging port, the mechanical contact, the unidirectional conductive device D4 and the battery positive electrode can be connected in turn, or the positive electrode of the charging port, the unidirectional conductive device D4, the mechanical contact and the positive electrode of the battery can be connected in turn. In the negative circuit, the battery negative electrode, the unidirectional conductive device D4, the mechanical contact and the negative electrode of the charging port can be connected in turn, or the battery negative electrode, the mechanical contact, an unidirectional wire device and the negative electrode of the charging port can be connected in turn.

The above mechanical contact device K1 can be a single contact device or a multi-contact device, which can be selected according to the actual needs, and no specific requirements are made here.

The mechanical contact device K1 is connected with the voltage-stabilizing circuit, and the voltage-stabilizing circuit supplies power for the mechanical contact device K1.

When the charger is connected with the charging port of the underwater cleaning machine, the voltage-stabilizing circuit is powered by the mechanical contact device K1, the mechanical contact device K1 is electrically conducted, and the mechanical contact device K1 is connected with the battery through the unidirectional conductive device D4 for charging; and/or when the charging port of the underwater cleaning machine and the charger are disconnected, the mechanical contact device K1 is disconnected, and the charging port and the battery remain in a disconnecting state, so that no electrolytic circuit is formed at the positive electrode and the negative electrode of the charging port.

The charging method of the underwater cleaning machine is to connect the mechanical contact device K1 between the charging port and the battery of the underwater cleaning machine, and supply power to the mechanical contact device K1 through the voltage-stabilizing circuit to control conduction and disconnection of the mechanical contact device K1, and control a connection state between the charging port and the battery. In a non-charging state (such as the charger is removed ) , the charging port and the battery are kept in a normally opening state to ensure that the underwater cleaning machine is in an uncharged state when operating in water, and the positive electrode and the negative electrode of the charging port are avoided to form an electrolytic circuit, and the charging port and other metal exposed parts of the underwater cleaning machine are avoided to form an electrolytic circuit, so as to avoid electrolytic corrosion and prolong service life.

When charging the battery, a charging state can be judged according to a state of an indicator light for the charging port. When the indicator light for the charging port is red, the underwater cleaning machine is charging. When the indicator light for the charging port is green, the underwater cleaning machine is full of electricity.

In this embodiment, preferably, the mechanical contact device K1 includes two contacts, the mechanical contact device K1 can be a double contact device. Alternatively, this mechanical contact device can be two single contact devices, according to the actual needs of the selection.

In this embodiment, preferably, an unidirectional conductive device D4 is included in both the positive circuit and the negative circuit.

In this embodiment, specifically, as shown in Figure. 9, in the positive circuit, one end of a mechanical contact is connected to the positive electrode of the charging port, the other end is connected to a positive electrode of an unidirectional conductive device D4, and a negative electrode of a unidirectional conductive device D4 is connected to the positive electrode of the battery; in the negative circuit, one end of the other mechanical contact is connected with the negative electrode of the charging port, the other end is connected with a negative electrode of the other unidirectional conductive device D4, and a positive electrode of the other unidirectional conductive device D4 is connected with the negative electrode of the battery. Two mechanical contacts remain in a normally opening state. In a non-charging state, the charging port is not connected with the battery, and the positive electrode and the negative electrode of the charging port will not form an electrolytic circuit and will not produce electrolytic corrosion.

When the underwater cleaning machine is in a non-charging state, the mechanical contact device K1 remains in a normally opening state, and the charging port and the battery remain in a disconnecting state to ensure that the underwater cleaning machine is in an uncharged state when operating in water. When the charger is correctly connected to the charging port, the voltage-stabilizing circuit provides a stable voltage value for the mechanical contact to ensure a stable operation of the mechanical contact device K1, so that the mechanical contact device K1 is closed, and the charging port is connected with the battery through the unidirectional conductive device D4 to perform charging. When the charger is removed, due to existence of the unidirectional conductive device D4, the mechanical contact device K1 is disconnected, so that the charging port and the battery remain in disconnecting state, which ensures that the underwater cleaning machine is in an uncharged state when operating in water under the non-charging state. There is no electrolytic circuit at the positive and negative circuits of the charging port to avoid electrolytic corrosion.

The voltage-stabilizing circuit includes a first diode D1, a first resistor R1, a voltage-stabilizing diode D2 and a triode Q1. A positive electrode of the first diode D1 is connected with the positive electrode of the charging port. The negative electrode of the first diode D1 is connected with the first resistor R1. The first resistor R1 is connected with a negative electrode of the voltage-stabilizing diode D2. A positive electrode of the voltage-stabilizing diode D2 is connected with the negative electrode of the charging port. A base electrode and a collector of the triode Q1 are connected with two ends of the first resistor R1 respectively. An emitter of the triode Q1 and the positive electrode of the voltage-stabilizing diode D2 are connected with the mechanical contact device K1 respectively to construct a structure of the voltage-stabilizing circuit. The voltage-stabilizing circuit is connected with the mechanical contact device K1, which provides a stable voltage for the mechanical contact device K1, so that the mechanical contact device K1 is closed, and then the charging port is connected with the battery for charging.

When the charging port is connected with the charger, output of the positive electrode of the charger passes through the first diode D1, the first resistor R1 and the voltage-stabilizing diode D2, which is connected with the negative electrode of the charger. The voltage-stabilizing diode D2 stabilizes a voltage of the charger to a fixed value, so that the triode Q1 works in the adjustment tube state, so that a emitter of the triode Q1 outputs a fixed voltage to ensure a stable operation of the mechanical contact device K1. The normally open contact of the mechanical contact device K1 is closed, so that the charging port is connected with the battery through the unidirectional conductive device D4 to maintain a charging state.

Specifically, as shown in Figure. 8, in the positive circuit, one end of the mechanical contact is connected to the positive electrode of the charging port, the other end is connected with the positive electrode of the unidirectional conductive device D4, and the negative electrode of the unidirectional conductive device D4 is connected with the positive electrode of the battery; in the negative circuit, one end of the other mechanical contact is connected with the negative electrode of the charging port, the other end is connected with the negative electrode of another unidirectional conductive device D4, and the positive electrode of another unidirectional conductive device D4 is connected with the negative electrode of the battery. Two mechanical contacts remain in a normally opening state. In the non-charging state, the charging port is not connected with the battery, and no electrolytic circuit will be formed in the positive electrode and the negative electrode of the charging port, and no electrolytic corrosion will be produced.

The above unidirectional conductive device D4 is a diode. The above mechanical contact device K1 is preferably a relay.

The mechanical contact device K1 is connected in parallel with a second diode D3, a positive electrode of the second diode D3 is connected with the positive electrode of a voltage-stabilizing diode D2, a negative electrode of the second diode D3 is connected with the emitter of the triode Q1, and the second diode D3 is connected in parallel with a coil of the mechanical contact device K1.

When the underwater cleaning machine is working, the underwater cleaning machine is in a non-charging state, and the mechanical contact device K1 remains in a normally opening state. The charging port and the battery rely on a normally open mechanical contact of the mechanical contact device K1 to break off, ensuring that it is in an uncharged state when operating in water. The positive and negative electrodes of the charging port will not form an electrolytic circuit and will not cause electrolytic corrosion.

When the underwater cleaning machine needs to be charged, when the charger is correctly connected with the charging port, output of the positive electrode of the charger passes through the first diode D1, the first resistor R1, the voltage-stabilizing diode D2 of the voltage-stabilizing circuit, and finally connects to the negative electrode of the charger. The voltage-stabilizing diode D2 stabilizes a voltage of the charger to a fixed value, so that the triode Q1 works in the adjustment tube state, so that the emitter of the triode Q1 outputs a fixed voltage value to ensure a stable operation of the mechanical contact device K1. The normally open contact of the mechanical contact device K1 is closed, so that the charging port is connected with the internal battery through the unidirectional conductive device D4 to maintain the charging state.

When the charger is removed, due to existence of the unidirectional conductive device D4, a voltage of the battery cannot output to the charging port, and the voltage-stabilizing circuit loses the power, which causes the contact of the mechanical contact device K1 to be disconnected and restores a disconnected state between the charging port and the internal battery.

According to the above embodiments, the mechanical contact device and at least one unidirectional conductive device are arranged between the charging port of the underwater cleaning machine and the internal battery ( the mechanical contact device provides the mechanical contact and is connected in series with the unidirectional conductive device), and the mechanical contact device is connected with a voltage-stabilizing circuit. The voltage-stabilizing circuit provides a stable voltage for the mechanical contact device to ensure the stable operation of the mechanical contact device. The mechanical contact device remains a opening state. When charging the underwater cleaning machine, under the action of the voltage-stabilizing circuit, the mechanical contact device is closed, the internal battery is charged, and the charger is disconnected from the charging port of the underwater cleaning machine. In the setting of unidirectional conductive devices, the battery can not output to the charging port, the voltage-stabilizing circuit loses the power, the mechanical contact device is disconnected, the charging port and the battery remain in a disconnecting state, and the charging port is kept in a non-electrical connection state. To avoid a formation of an electrolytic circuit at the positive and negative electrodes of the charging port, to avoid the formation of an electrolytic circuit between the positive and negative electrodes of the charging port and exposed parts of other metals in the underwater cleaning machine, to avoid electrolytic corrosion, and to avoid affecting the use of the whole machine, and to extend service life.

See Figure. 10 for a flow diagram of a charging method for yet underwater cleaning machine according to an embodiment of the present application. The charger realizes rapid charging of the internal battery of the underwater cleaning machine. In the charging circuit of the charging port and the battery, a sampling module and comparison module are provided. A current direction of the sampling module is monitored by the comparison module, and conduction and disconnection of a control switching module are output to realize rapid charging, avoid causing higher heating, and ensure a reliable operation of the underwater cleaning machine.

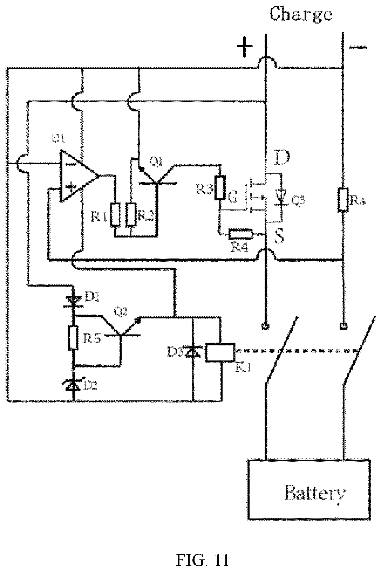

As shown in Figure. 10 and Figure. 11, a charging method of the underwater cleaning machine can include the following steps:
if a charger is connected with a charging port of the underwater cleaning machine, a voltage-stabilizing module supplies power to a comparison module for charging;
if the charger is not connected with the underwater cleaner charging port, it will not be charged;
the sampling module is connected between the charging port of the underwater cleaning machine and the battery, and the sampling module collects a current in the charging circuit; and
the comparison module obtains a direction of the current, controls conduction and disconnection of a switching module according to the current direction, and determines whether charging is completed, and the switching module is connected between the charging port of the underwater cleaning machine and the battery. The comparison module is connected with the switching module, and the comparison module monitors the current direction on the sampling module, controls the conduction and disconnection of the switching module according to the current direction, and determines whether the charging is completed.

A normally open contact module is also connected between the charging port of the underwater cleaning machine and the battery. The normally open contact module is connected in series with the switching module and the sampling module respectively to control conduction and disconnection of a circuit between the charging port and the battery. That is, along a direction from the charging port of the underwater cleaning machine to the battery, the charging port of the underwater cleaning machine, the switching module and the normally open contact module are connected with the battery in turn, and the charging port of the underwater cleaning machine, the sampling module and the normally open contact module are connected with the battery in turn to form a circuit between the charging port and the battery.

If the charger is connected with the charging port of the underwater cleaning machine, the voltage-stabilizing module supplies power to the normally open contact module, and the normally open contact module is closed for charging. At this time, the voltage-stabilizing module supplies power to both the normally open contact module and the comparison module.

Otherwise, the normally open contact module remains in a normally opening state and does not be charged.

In the step of " the comparison module obtains the direction of the current, controls conduction and disconnection of the switching module according to the current direction, and determines whether charging is completed", the comparison module obtains the current direction from the sampling module, if the current direction is from the battery to the charging port, the comparison module controls the switching module to be conducting, and the charger charges the battery; if the current direction is a direction from the charging port to the battery, the comparison module controls the switching module to turn off, charging is completed, and the normally open contact module is disconnected.

In the above steps, when judging whether the charging is completed, whether the charging is completed is judged according to whether the charger is removed from the charging port. If the charger is removed from the charging port, the charging is completed. If the charger does not leave the charging port, the charging is not completed and the charging continues. After the charger is connected with the charging port, a charging state can be judged according to a state of the indicator light for the charging port. When the indicator light for the charger lights red, the underwater cleaning machine is charging. When the indicator light of the charger lights green, power of the underwater cleaning machine is full, so as to judge time when the charger is removed.

Specifically, the sampling module, arranged between the charging port and the battery, is used to collect the current in the charging circuit. The switching module, arranged between the charging port and the battery, is used to control a voltage on and off of a leakage circuit of the battery. The switching module is in an electrically conducting state during charging, and the switching module is in a disconnecting state when non-charging. the comparison module monitors the current direction of the sampling module, and conduction and disconnection of the switching module is controlled according to the direction of the current. The normally open contact module is arranged between the charging port and the battery to control conduction and disconnection of the circuit between the charging port and the battery. The charging port, the sampling module, the normally open contact module and the battery are connected in turn, and the charging port, the switching module, the normally open contact module and the battery are connected in turn to form a circuit between the charging port and the battery. The voltage-stabilizing module, connected with the normally open contact module and the comparison module, and is respectively connected with the positive electrode and the negative electrode of the charging port to supply power for the normally open contact module and the comparison module, so as to ensure voltage stability of the normally open contact module and the comparison module during the charging.

When a fast charging structure of the underwater cleaning machine is working, the sampling module collects a current in the charging circuit, the comparison module monitors a direction of the current in the sampling module, and outputs conduction and disconnection of the control switching module according to the direction of the current, so as to realize the switching module conducting during the charging. After the charger is removed, the switching module is closed. After the charger is removed, the charging circuit is disconnected. The voltage-stabilizing module supplies power to the comparison module during the charging, so as to realize fast charging of the battery.

The structure also includes a normally open contact module, which is arranged between the charging port and the battery. The normally open contact module is connected in series with the switching module and the sampling module respectively to control conduction and disconnection of a circuit between the charging port and the battery. Specifically, the charging port, the switching module, and the normally open contact module are connected in turn with the battery, and the charging port, the sampling module, and the normally open contact module are connected in turn with the battery to form a circuit between the charging port and the battery. The voltage-stabilizing module is connected with the normally open contact module. The normally open contact module is in a normally open state, during the charging, the voltage-stabilizing module supplies power to the normally open contact module, and the normally open contact module is closed to realize conducting of the charging circuit.

The sampling module collects the current in the charging circuit, the comparison module monitors the direction of the current in the sampling module, and outputs the conduction and disconnection of the control switching module according to the direction of the current, so as to realize conducting of the switching module during charging. After the charger is removed, the switching module is closed, and the normally open contact module is in a normally open state. When charging, the normally open contact module is closed to realize conducting of the charging circuit. After the charger is removed, the charging circuit is disconnected. When charging, the voltage-stabilizing module supplies power to the normally open contact module and the comparison module to realize fast charging of the battery.

The sampling module mentioned above is a sampling resistor Rs, which is a commercially available product. The sampling resistor Rs is selected according to the actual needs, and no specific requirements are made here.

The above normally open contact module is a normally open mechanical contact device K1, preferably a relay. The number of the normally open mechanical contact devices K1 is at least one, which can be multiple. The selection is based on actual needs, and no specific requirements are made here.

In this embodiment, the number of the normally open mechanical contact device K1 is one. The normally open mechanical contact device K1 has two contacts. One contact is connected in series with the sampling resistor Rs and is connected between a negative electrode of the charging port and a negative electrode of the battery. The other contact is connected in series with the switching module and is connected between a positive electrode of the charging port and a positive electrode of the battery.

The comparison module monitors a current direction on the sampling resistor Rs. The comparison module includes a comparator U1 and a first triode Q1. A reverse input end and a positive input end of the comparator U1 are connected to two ends of the sampling module respectively. The first triode Q1 receives an output signal of the comparator U1. The comparator U1 monitors a current direction of the sampling module, outputs a positive voltage or a negative voltage, and controls conduction or cutoff of the first triode Q1. When the comparator U1 detects that the current direction of the sampling resistor Rs is in a direction from the battery to the charging port, a positive voltage is output, and the first triode Q1 is controlled to be conducting. At this time, the switching module is turned on. The charger charges the battery. When the comparator U1 detects a current direction on the sampling resistance Rs is a direction from the charging port to the battery, a negative voltage is output, and the first triode Q1 is controlled to cut off. At this time, the switching module is turned off and the charging is ended.

A first resistor R1 is connected between the comparator U1 and the first triode Q1, and a second resistor R2 is connected between a base and a emitter of the first triode Q1.

Specifically, a forward input end of the comparator U1 is connected with one end of the sampling resistor Rs, a reverse input end of the comparator U1 is connected with the negative electrode of the charging port, an output end of the comparator U1 is connected with the first resistor R1, the first resistor R1 is connected with a base of the first triode Q1, one end of the second resistor R2 is connected with the base of the first triode Q1, the other end of the second resistor R2 is connected with a emitter of the first triode Q1, a collector of the first triode Q1 is connected with the switching module, and the emitter of the first triode Q1 is connected with the negative electrode of the charging port.

The above comparator U1 is a commercially available product and is selected according to actual needs. No specific requirements are made here.

The above first triode Q1 is a NPN tube, which is a commercially available product. It is selected according to the actual needs, and no specific requirements are made here.

The above switching module includes transistor Q3, transistor Q3 has a parasitic diode. When the first triode Q1 is turned on, the positive electrode of the charging port forms a circuit with the negative electrode of the charging port through the transistor Q3 and the first triode Q1. The transistor Q3 is turned on to quickly charge the battery; when the first triode Q1 is cut off, the transistor Q3 is turned off, cutting off an outward leakage circuit of the battery.

A third resistor R3 is connected between a gate electrode of the transistor Q3 and the collector of the first triode Q1, and a fourth resistor R4 is connected between a gate electrode and a source electrode of the transistor Q3.

Specifically, the collector of the first triode Q1 is connected with the gate electrode of the transistor Q3 through the third resistor R3, the gate electrode of the transistor Q3 is connected with the source electrode of the transistor Q3 through the fourth resistor R4, the source electrode of the transistor Q3 is connected with a contact of the normally open mechanical contact device K1, a drain of the transistor Q3 is connected with the positive electrode of the charging port, a positive electrode of an internal parasitic diode of the transistor Q3 is connected with the drain of the transistor Q3, and a negative electrode of the internal parasitic diode is connected with the source electrode of the transistor Q3.

The transistor Q3 is a metal-oxide semiconductor field effect transistor, and preferably, the transistor Q3 is a PMOS tube.

The voltage-stabilizing module includes a second triode Q2, a first diode D1, a fifth resistor R5 and a voltage-stabilizing diode D2. A positive electrode of the first diode D1 is connected with the positive electrode of the charging port, a negative electrode of the first diode D1 is connected with a collector of the second triode Q2, the negative electrode of the first diode D1 is connected with a negative electrode of the voltage-stabilizing diode D2 through the fifth resistor R5, a positive electrode of the voltage-stabilizing diode D2 is connected with the negative electrode of the charging port, the negative electrode of the voltage-stabilizing diode D2 is connected with a base of the second triode Q2, and a emitter of the second triode Q2 is connected with the normally open contact module. The positive electrode of the voltage-stabilizing diode D2 is connected with the normally open contact module, and the voltage-stabilizing module is powered a coil of the normally open contact module respectively, so that contacts of the normally open contact module are closed, which ensures that the positive electrode of the charging port, the transistor Q3 and the positive electrode of the battery are connected. At the same time, the negative electrode of the charging port, the sampling resistor Rs and the negative electrode of the battery are connected. At the same time, the voltage-stabilizing module supplies power to the comparison module.

The emitter of the second triode Q2 and the negative electrode of the charging port are respectively connected with the comparator U1 to supply power for the comparator U1. The emitter of the second triode Q2 is connected with a positive side power supply pin of the comparator U1, and the negative electrode of the charging port is connected with a negative side power supply pin of the comparator U1.

The normally open contact module is connected in parallel with the second diode D3, a positive electrode of the second diode D3 is connected with the negative electrode of the charging port, and a negative electrode of the second diode D3 is connected with the emitter of the second triode Q2.

In a non-charging state of the underwater cleaning machine, the mechanical contact device K1 remains in a opening state, and a contact of the mechanical contact device K1 between the charging port and the battery is disconnected to ensure that it is in an uncharged state when operating in the water. A electrical connection between the charging port and the internal battery is disconnected, so as to ensure that the charging port of the underwater cleaning machine can completely eliminate leakage corrosion phenomenons when operating in the water, and ensure reliable operations of the machine.

When the charger is correctly connected with the charging port, a positive electrode of the charger passes through the first diode D1, the fifth resistor R5, the voltage-stabilizing diode D2, the second triode Q2, and the negative electrode of the charging port to form a voltage-stabilizing circuit, which supplies power to a coil of the mechanical contact device K1. The normally open mechanical contact of the mechanical contact device K1 is closed, which ensures that the positive electrode of the charging port and the transistor Q3 are connected with the positive electrode of the battery, and the negative electrode of the charging port and the sampling resistor Rs are connected with the negative electrode of the battery. At the same time, the voltage-stabilizing circuit supplies power to the comparator U1. At the beginning, a charging current passes through a parasitic diode of the transistor Q3, a mechanical contact of the mechanical contact device K1, the positive electrode of the battery, the negative electrode of the battery, another mechanical contact of the mechanical contact device K1, and the sampling resistor Rs to the negative electrode of the charging port. The in-phase end of the comparator U1 inputs a positive voltage higher than a reverse end. The comparator U1 works in an open-circuit comparison state and outputs a positive limiting voltage. The positive limiting voltage output controls the first triode Q1 saturation conduction through the first resistor R1. The positive electrode of the charging port forms a circuit through a parasitic diode of a crystal, the fourth resistor R4, the third resistor R3, the first triode Q1, and the negative electrode of the charging port (the third resistor R3 may be 0 ohm). A suitable partial voltage is formed between both ends of the fourth resistor R4, which is applied to GS ends of the transistor Q3 to achieve a conduction condition of the transistor Q3, which promotes saturation conduction of the transistor Q3. Conduction resistor Rds of the transistor Q3 reaches the minimum, which can achieve fast charging with high current.

When the charger is removed, because the transistor Q3 is in a conduction state, the battery will supply power to the voltage-stabilizing circuit, the comparator U1, and the mechanical contact device K1 through the mechanical contact of the mechanical contact device K1, the transistor Q3, and the sampling resistor Rs. But at this time, the current is through the positive electrode of the battery, one mechanical contact of mechanical contact device K1, the transistor Q3, the positive electrode of the charging port, the voltage-stabilizing circuit, the negative electrode charging port, the sampling resistor Rs, another mechanical contact of the mechanical contact device K1, the negative electrode of the battery. At this time, the current through the sampling resistor Rs has been reversed, and an in-phase end of the comparator U1 inputs a negative voltage lower than an antiphase end. The comparator U1 outputs a negative limiting voltage ( 0 V voltage). The first triode Q1 cuts off, and gate electrode and source electrode circuits that maintain conduction of the transistor Q3 are cut off. The fourth resistor R4 is connected in parallel between a gate electrode and a source electrode of the transistor Q3 to ensure that the gate electrode and the source electrode are at the same potential. The transistor Q3 is turned off, and the battery's outward leakage circuit is cut off. The voltage-stabilizing circuit is powered off, and the mechanical contact device K1 also loses the coil power supply and automatically cuts off, restores a non-charging state, and ends the charging.

Because of the above technical scheme, in the charging circuit, a sampling module is set up to collect the current between the charging port and the battery, and a comparison module is set up to monitor the current direction on the sampling resistor. According to the direction of the current output, the conduction and disconnection of the switching module between the charging port and the battery is controlled to realize the conduction and disconnection of the switching module during the charging. After the charger is removed, the switching module is closed, and the normally open mechanical contact device is disconnected to end the charging. In addition, the switching module adopts a metal-oxide semiconductor field effect transistor with low internal resistance, which allows high current to pass through and avoids causing high heat, thereby shortening time of the charging, realizing fast charging and ensuring reliability of the machine operation. In addition, after the charger is removed, the normally open mechanical contact device is disconnected, and the electrical connection between the charging port and the internal battery is disconnected, so as to ensure that the charging port of the underwater cleaning machine can completely eliminate the leakage corrosion phenomenons when it operates in water, and ensure the reliable operation of the machine.

It should be noted that the above embodiments are only illustrated by the division of the above functional modules when implementing the charging method for the underwater cleaning machine. In practical applications, the above functions can be assigned to different functional modules according to the needs, that is, the internal structure of the device is divided into different functional modules to complete all or part of the functions described above.

The serial number of the above-mentioned application embodiments is only for description, not for the merits of the embodiments.

In the above-mentioned embodiments of the present application, it can be achieved in whole or in part by software, hardware, firmware or any combination thereof. When implemented using software, it can be implemented in the form of computer program products in whole or in part. The computer program product includes one or more computer instructions. When loading and executing the computer program instruction on the computer, the process or function described in accordance with the application embodiment is produced in whole or in part. The computer may be a general purpose computer, a special purpose computer, a computer network, or other programmable device. The computer instructions can be stored in the computer readable storage medium or transmitted through the computer readable storage medium. The computer instructions described in can be transmitted from one site, a computer, server or data center to another site, the computer, the server or the data center through wired ( such as a coaxial cable, a optical fiber, and a Digital Subscriber Line ( DSL)) or wireless ( such as infrared, wireless, microwave, etc. ). The computer readable storage medium can be any available medium that the computer can access or a data storage device including a server, data center and other data storage devices integrated with one or more available media. The available media can be magnetic media (e.g. a floppy disk, a hard disk, and a tape ), optical media ( e.g. a Digital Versatile Disc, DVD), or semiconductor media ( e.g. a Solid State Disk, SSD), etc.

Those ordinary skilled in the art can understand all or part of the process of implementing the above embodiments' method, which can be completed by computer program to instruct the relevant hardware. The program can be stored in the computer readable storage medium, and the program can include the process of the embodiments of the above methods when it is executed. The aforementioned storage media include: a Read Only Memory ( ROM), a Random Access Memory ( RAM), a disk or a disc and other media that can store program code. In the case of no conflict, the technical features in this embodiments and the embodiments' plan can be combined at will.

The above mentioned embodiments are only the description of the preferred embodiments of the present application, not the limitation of the scope of the present application. Without deviating from the design spirit of the present application, the various deformations and improvements made by those ordinary skilled in the art to the technical scheme of the present application should fall within the scope of protection determined by the claims of the present application.

## Claims

1. A charging method for an underwater cleaning machine, wherein a contact module is arranged between a charging port and a battery of the underwater cleaning machine, and the contact module remains a disconnecting state during a non-charging period of the underwater cleaning machine; the charging method comprises:
in a case that a power supply signal of a power supply is detected by the charging port, conducting the contact module so as to make the power supply charge the battery.

2. The charging method of claim 1, wherein the underwater cleaning machine further comprises a charging management module; wherein the charging management module is used to monitor a charging current and/or a voltage of the battery; and
the charging management module is connected with the contact module.

3. The charging method of claim 1, wherein the underwater cleaning machine further comprises a voltage-stabilizing module, and the voltage-stabilizing module and the contact module are arranged between the charging port and the battery, and in a case that the power supply signal of the power supply is detected by the the charging port, the voltage-stabilizing module controls the contact module to be conducting, so that the battery is charged by the power supply.

4. The charging method of claim 1, wherein the underwater cleaning machine further comprises: a controllable switching module and a control module; wherein the controllable switching module is arranged between the contact module and the battery, an input port of the control module is connected with the contact module, and an output port of the control module is connected with the controllable switching module; the charging method further comprises:
in a case that the power supply signal is detected being output by the contact module through the control module, controlling the controllable switching module conducting through the control module to make the power supply charge the battery; or
in a case that the power supply signal is detected not being output by the contact module through the control module, controlling the controllable switching module to be disconnected through the control module to make the power supply stop charging the battery.

5. The charging method of claim 4, wherein the underwater cleaning machine further comprises a voltage sampling module connected with the input port of the control module; and
after the controllable switching module is controlled being conducting through the control module, the charging method further comprises:
collecting a voltage between both ends of the battery through the voltage sampling module; and
controlling the controllable switching module being disconnected through the control module in a case that the voltage between both ends of the battery is greater than a sampling voltage threshold.

6. The charging method of claim 4, wherein the underwater cleaning machine further comprises a current sampling module arranged between a negative electrode of the battery and the control module; and the method further comprises:
sampling charging and discharging currents of the battery through the current sampling module; and
controlling the controllable switching module to be disconnected through the control module in a case that a charging current of the battery exceeds a threshold range of sampling current.

7. The charging method of claim 4, wherein the underwater cleaning machine further comprises a temperature sampling module arranged between the battery and the control module; and the charging method further comprises:
obtaining a temperature value of the battery through the temperature sampling module; and
controlling the controllable switching module being disconnected through the control module in a case that the temperature value of the battery exceeds a temperature threshold range.

8. The charging method of claim 7, wherein the underwater cleaning machine further comprises a signal amplification module arranged between the current sampling module and the control module; and the charging method further comprises:
amplifying the charging and discharging currents of the battery by the signal amplification module to obtain an amplified current of the battery; and
determining a voltage corresponding to the amplified current of the battery;
when the voltage corresponding to the amplified current of the battery is less than a preset reference voltage, the battery is in a charging state; and
when the voltage corresponding to the amplified current of the battery is not less than the preset reference voltage, the battery is in a discharging state.

9. The charging method of any one of claims 1 to 8, wherein the contact module is a mechanical contact switch, the mechanical contact switch comprises a relay, and the contact module comprises two or more normally open contacts.

10. The charging method of any one of claims 1 to 8, wherein the controllable switching module is any one of a relay, a N-channel type insulated gate type field effect transistor or a P-channel type insulated gate type field effect transistor.

11. The charging method of claim 1, wherein one or more mechanical contact devices are arranged between the charging port of the underwater cleaning machine and the battery, such that when a charger is disconnected from the charging port of the underwater cleaning machine, the mechanical contact device is disconnected, the charging port and the battery remain a disconnected state, and no electrolytic circuit is formed at the charging port.

12. The charging method of claim 11, wherein the mechanical contact device is a mechanical normally open contact device, and the mechanical contact device comprises two or more mechanical contacts.

13. The charging method of claim 12, wherein the mechanical contact device is a relay.

14. The charging method of claim 11 or 12, wherein one or more unidirectional conductive devices are arranged between the charging port and the battery, and the mechanical contact device and one or more unidirectional conductive devices are connected in series between the charging port and the battery.

15. The charging method of claim 14, wherein the charging port, the mechanical contact device, the unidirectional conductive device and the battery constitute a charging circuit, wherein a positive circuit and a negative circuit in the charging circuit both comprise one or more the mechanical contacts, and the positive circuit and/or the negative circuit respectively comprise one or more the unidirectional conductive devices;
wherein the positive circuit is a circuit between a positive electrode of the charging port and a positive electrode of the battery, and the negative circuit is a circuit between a negative electrode of the battery and a negative electrode of the charging port.

16. The charging method of claim 15, wherein the unidirectional conductive device is a diode.

17. The charging method of claim 15, wherein the mechanical contact device is connected with a voltage-stabilizing circuit.

18. The charging method of claim 11, wherein when the charger is connected with the charging port of the underwater cleaning machine, a voltage-stabilizing circuit supplies electric power to the mechanical contact device, the mechanical contact device is in power, and the mechanical contact device is connected with the battery through a unidirectional conductive device for charging; and/or
when the charger is disconnected from the charging port of the underwater cleaning machine, the mechanical contact device is disconnected, and the charging port keeps a disconnecting state with the battery, in order that no electrolytic circuit is formed at positive and negative electrodes of the charging port;
wherein the unidirectional conductive device is arranged between the mechanical contact device and the battery; and the voltage-stabilizing circuit is connected with the mechanical contact device.

19. The charging method of claim 17 or 18, wherein the voltage-stabilizing circuit comprises a first diode, a first resistor, a voltage-stabilizing diode and a triode, a positive electrode of the first diode is connected with a positive electrode of the charging port, a negative electrode of the first diode is connected with the first resistor, the first resistor is connected with a negative electrode of the voltage-stabilizing diode, a positive electrode of the voltage-stabilizing diode is connected with a negative electrode of the charging port, the base electrode and the collector of the triode are respectively connected to two ends of the first resistor, the emitter of the triode and the positive electrode of the voltage-stabilizing diode are connected with the mechanical contact device respectively.

20. The charging method of claim 19, wherein the mechanical contact device is connected in parallel with a second diode, a positive electrode of the second diode is connected with the positive electrode of the voltage-stabilizing diode, and a negative electrode of the second diode is connected with the emitter of the triode.

21. The charging method of claim 1, wherein in a case that the charger is connected with the charging port of the underwater cleaning machine,
supplying power to the comparison module for charging through the voltage-stabilizing module;
collecting a current in a charging circuit through a sampling module;
obtaining a current direction through a comparison module, controlling conduction and disconnection of a switching module according to the current direction to determine whether charging is completed.

22. The charging method of claim 21, wherein whether the charging is completed is judged according to whether the charger removes the charging port, in a case that the charger removes the charging port, the charging is completed.

23. The charging method of claim 21, wherein a normally open contact module is connected between the charging port of the underwater cleaning machine and the battery, the normally open contact module is connected in series with the switching module and the sampling module respectively to control conduction and disconnection of a circuit between the charging port and the battery;
in a case that the charger is connected with the charging port of the underwater cleaning machine, supplying power to the normally open contact module through the voltage-stabilizing module, and the normally open contact module is closing for charging;
otherwise, the normally open contact module remains in a normally opening state and does not be charged;
preferably, the normally open contact module is a normally open mechanical contact device.

24. The charging method of any one of claims 21 to 23, wherein in a case that the current direction is from the battery to the charging port, controlling the switching module to be conducting through the comparison module, and charging the battery through the charger.

25. The charging method of any one of claims 21 to 23, wherein in a case that the current direction is a direction from the charging port to the battery, controlling the switching module to turn off through the comparison module, and the charging is completed;
preferably, the charging is completed, and the normally open contact module is disconnected and is in a normally open state.

26. The charging method of any one of claims 21 to 23, wherein the sampling module is connected between the charging port and the battery, and the sampling module is a sampling resistor.

27. The charging method of claim 26, wherein the comparison module comprises a comparator and a first triode, a reverse input end and a forward input end of the comparator are respectively connected to two ends of the sampling module, the first triode receives a output signal of the comparator, the comparator monitors a current direction of the sampling module, outputs a positive voltage or a negative voltage, and controls the turn-on or turn-off of the first triode;
preferably, a first resistor is connected between the comparator and the first triode, and a second resistor is connected between a base electrode and a emitter electrode of the first triode.

28. The charging method of claim 27, wherein the switching module is connected between the charging port and the battery, the switching module comprises a transistor, the transistor comprises a parasitic diode, when the first triode is turned on, the positive electrode of the charging port forms a circuit through the transistor and the first triode with a negative electrode of the charging port, the transistor is turned on to quickly charge the battery; when the first triode is cut off, the transistor is turned off and the battery outward leakage circuit is cut off;
preferably, a third resistor is connected between the gate electrode of the transistor and a collector of the first triode, and a fourth resistor is connected between the gate electrode of the transistor and the source electrode of the transistor;
preferably, the transistor is a metal-oxide semiconductor field effect transistor.

29. The charging method of any one of claims 21 to 23, wherein the voltage-stabilizing module comprises a second triode, a first diode, a fifth resistor and a voltage-stabilizing diode, a positive electrode of the first diode is connected with a positive electrode of the charging port, a negative electrode of the first diode is connected with a collector of the second triode, the negative electrode of the first diode is connected with a negative electrode of the voltage-stabilizing diode through the fifth resistor, a positive electrode of the voltage-stabilizing diode is connected with a negative electrode of the charging port, a negative electrode of the voltage-stabilizing diode is connected with a base electrode of the second triode, an emitter of the second triode is connected with the normally open contact module, the positive electrode of the voltage-stabilizing diode is connected with the normally open contact module, and the emitter of the second triode and the negative electrode of the charging port are respectively connected with the comparator to supply power for the comparator.

30. The charging method of claim 29, wherein the normally open contact module is connected in parallel with a second diode, a positive electrode of the second diode is connected with the negative electrode of the charging port, and the negative electrode of the second diode is connected with the emitter of the second triode.

31. A charging structure for an underwater cleaning machine, comprising:
a charging port, a battery, and a contact module;
wherein the contact module is arranged between the charging port and the battery, the contact module remains in a disconnecting state during a non-charging period of the underwater cleaning machine; and
when the contact module is conducting, charging the battery from the charging port.

32. The charging structure of claim 31, wherein the charging structure further comprises a charging management module connected with the contact module to manage a charging current and/or a voltage of the battery;
the charging port supplies power for the contact module and controls disconnection or conduction of the contact module.

33. The charging structure of claim 32, wherein the charging management module is arranged between the contact module and the charging port or between the contact module and the battery.

34. The charging structure of claim 32, wherein the charging management module comprises a charging management chip and a corresponding peripheral circuit.

35. The charging structure of claim 31, wherein the charging structure further comprises a voltage-stabilizing module, the contact module is connected between the charging port and the battery, during a non-charging period of the underwater cleaning machine, the contact module remains in a disconnecting state;
the voltage-stabilizing module is connected with the contact module, and the contact module is controlled to be conducting by the voltage-stabilizing module to make a power supply charge the battery.

36. The charging structure of claim 35, wherein one or more controllable switching modules are arranged in a positive circuit and/or a negative circuit between the charging port and the battery, the controllable switching module is arranged between the contact module and the battery;
after the underwater cleaning machine is fully charged or the charger and/or charging power supply leave, the controllable switching module is in a disconnecting state;
after the underwater cleaning machine charger and/or a charging power supply leave, the contact module is in the disconnecting state.

37. The charging structure of claim 35, wherein the underwater cleaning machine comprises a control module, the control module is connected with the controllable switching module;
when an output signal of an output port of the contact module is detected by the control module, the controllable switching module is controlled to turn on.

38. The charging structure of claim 35, wherein the charging structure of the underwater cleaning machine comprises a sampling module I;
the sampling module I collects data in charging and discharging circuits of the battery and transmits the data to the control module, the control module judges to turn on or turn off the controllable switching module according to the data of the sampling module I.

39. The charging structure of claim 38, wherein the sampling module I comprises a voltage sampling module and/or a current sampling module.

40. The charging structure of claim 35, wherein the underwater cleaning machine comprises a power supply button, and the power supply button connects the battery and a control unit making the battery supply power to the control unit.

41. The charging structure of claim 35, further comprising a sampling module II arranged between the battery and the control module; wherein the sampling module II collects parameters of the battery and transmits the parameters to the control unit; and wherein
the control unit controls conduction and disconnection of the controllable switching module.

42. The charging structure of claim 31, wherein the sampling module II comprises a battery current acquisition module and/or a battery cell temperature acquisition module.

43. The charging structure of claim 31, wherein the charging structure is respectively connected with the charging port and the battery of the underwater cleaning machine, the charging structure comprises a mechanical contact device, a voltage-stabilizing circuit and one or more unidirectional conductive devices, the mechanical contact device and the unidirectional conductive device are connected in series between the charging port and the battery, the voltage-stabilizing circuit is connected with the mechanical contact device, the mechanical contact device is a mechanical normally open contact device, and the mechanical contact device comprises two or more mechanical contacts.

44. The charging structure of claim 31, wherein the charging port, a mechanical contact device, an unidirectional conductive device and the battery constitute a charging circuit, wherein a positive circuit and a negative circuit in the charging circuit respectively comprise one or more the mechanical contacts, and the positive circuit and/or the negative circuit comprise one or more the unidirectional conductive devices, respectively;
wherein the positive circuit is a circuit between a positive electrode of the charging port and a positive electrode of the battery, and the negative circuit is a circuit between a negative electrode of the battery and a negative electrode of the charging port.

45. The charging structure of claim 34, wherein in the positive circuit or the negative circuit, positions of the mechanical contact connected and the unidirectional conductive device in series is interchangeable.

46. The charging structure of claim 34, wherein a positive circuit is as follows: a positive electrode of the charging port is connected with one end of a mechanical contact, the other end of the mechanical contact is connected with a positive electrode of an unidirectional conductive device, and a negative electrode of the unidirectional conductive device is connected with a positive electrode of the battery.

47. The charging structure of claim 34, wherein a negative circuit is as follows: a negative electrode of the battery is connected with a positive electrode of the unidirectional conductive device, a negative electrode of the unidirectional conductive device is connected with one end of the mechanical contact, and the other end of the mechanical contact is connected with a negative electrode of the charging port.

48. The charging structure of any one of claims 33 to 37, wherein the unidirectional conductive device is a diode.

49. The charging structure of any one of claims 33 to 37, wherein the voltage-stabilizing circuit comprises a first diode, a first resistor, a voltage-stabilizing diode and a triode, a positive electrode of the first diode is connected with a positive electrode of the charging port, a negative electrode of the first diode is connected with the first resistor, the first resistor is connected with a negative electrode of the voltage-stabilizing diode, a positive electrode of the voltage-stabilizing diode is connected with a negative electrode of the charging port, the base electrode and the collector of the triode are respectively connected to two ends of the first resistor, the emitter of the triode and the positive electrode of the voltage-stabilizing diode are connected with the mechanical contact device respectively.

50. The charging structure of claim 39, wherein the mechanical contact device is connected in parallel with a second diode, a positive electrode of the second diode is connected with the positive electrode of the voltage-stabilizing diode, and a negative electrode of the second diode is connected with the emitter of the triode.

51. The charging structure of any one of claims 33 to 37, wherein the mechanical contact device is a relay.

52. The charging structure of claim 31, wherein the charging structure is connected between the charging port of the underwater cleaning machine and the battery, the charging structure comprises:
a sampling module, connected between the charging port and the battery to collect a current in the charging circuit;
a switching module, connected between the charging port and the battery to control voltage on and off of a battery leakage circuit;
a comparison module, detecting a current direction of the sampling module to control conduction and disconnection of the switching module; and
a voltage-stabilizing module, connected with a positive electrode and a negative electrode of the charging port respectively to supply power for the comparison module.

53. The charging structure of claim 31, wherein the sampling module is a sampling resistor.

54. The charging structure of claim 31 or 32, wherein the comparison module comprises a comparator and a first triode, a reverse input end and a forward input end of the comparator are respectively connected to two ends of the sampling module, the first triode receives a output signal of the comparator, the comparator detects a current direction of the sampling module, outputs a positive voltage or a negative voltage, and controls the turn-on or turn-off of the first triode.

55. The charging structure of claim 33, wherein a first resistor is connected between the comparator and the first triode, and a second resistor is connected between a base electrode and a emitter electrode of the first triode.

56. The charging structure of claim 33, wherein the switching module comprises a transistor, the transistor comprises a parasitic diode, when the first triode is turned on, the positive electrode of the charging port forms a circuit through the transistor and the first triode with a negative electrode of the charging port, the transistor is turned on to quickly charge the battery; when the first triode is cut off, the transistor is turned off and the battery outward leakage circuit is cut off; a third resistor is connected between the gate electrode of the transistor and a collector of the first triode, and a fourth resistor is connected between the gate electrode of the transistor and the source electrode of the transistor.

57. The charging structure of claim 35, wherein the transistor is a metal-oxide semiconductor field effect transistor.

58. The charging structure of claim 33, wherein the charging structure further comprises a normally open contact module, the normally open contact module is arranged between the charging port and the battery, the normally open contact module is connected in series with the switching module and the sampling module respectively to control conduction and disconnection of the circuit between the charging port and the battery;
the normally open contact module is connected with the voltage-stabilizing module, and the voltage-stabilizing module supplies power to the normally open contact module.

59. The charging structure of claim 57, wherein the normally open contact module is a normally open mechanical contact device; the normally open mechanical contact device is a relay.

60. The charging structure of claim 57, wherein the voltage-stabilizing module comprises a second triode, a first diode, a fifth resistor and a voltage-stabilizing diode, a positive electrode of the first diode is connected with a positive electrode of the charging port, a negative electrode of the first diode is connected with a collector of the second triode, the negative electrode of the first diode is connected with a negative electrode of the voltage-stabilizing diode through the fifth resistor, a positive electrode of the voltage-stabilizing diode is connected with a negative electrode of the charging port, a negative electrode of the voltage-stabilizing diode is connected with a base electrode of the second triode, a emitter of the second triode is connected with the normally open contact module, the positive electrode of the voltage-stabilizing diode is connected with the normally open contact module, and the emitter of the second triode and the negative electrode of the charging port are respectively connected with the comparator to supply power for the comparator.

61. The charging structure of claim 59, wherein the normally open contact module is connected in parallel with a second diode, a positive electrode of the second diode is connected with the negative electrode of the charging port, and the negative electrode of the second diode is connected with the emitter of the second triode.

62. An underwater cleaning machine, comprising one or more the charging structures in any of the claims 31 to 61.
